# EUROPEAN PATENT SPECIFICATION

(11) **EP 2 099 625 B1**
(45) Date of publication and mention of the grant of the patent: **25.07.2012**
(21) Application number: 07852087.1
(22) Date of filing: 04.12.2007
(51) Int. Cl.: B60G 17/0165, G01B 7/28, G01C 7/04

(54) **A METHOD FOR DETERMINING THE STATE OF A ROAD SURFACE AND METHOD OF GENERATING A LOG OVER THE USE OF A VEHICLE**
VERFAHREN ZUR BESTIMMUNG DES STATUS EINER STRASSENOBERFLÄCHE UND VERFAHREN ZUR ERZEUGUNG EINES PROTOKOLLS ZUR VERWENDUNG EINES FAHRZEUGS
PROCÉDÉ POUR DÉTERMINER L'ÉTAT D'UNE SURFACE DE ROUTE ET PROCÉDÉ DE GÉNÉRATION D'UN JOURNAL SUR L'UTILISATION D'UN VÉHICULE

(30) Priority: 05.12.2006 SE 0602606
(43) Date of publication of application: 16.09.2009
(73) Proprietor: Volvo Lastvagnar AB, 405 08 Göteborg (SE)
(72) Inventor: FRYK, Per-Olov, 426 77 Västra Frölunda (SE); ÖIJER, Fredrik, 411 29 Göteborg (SE)
(74) Representative: Fröhling, Werner Otto
(86) International application number: PCT/SE2007/001082
(87) International publication number: WO 2008/069729

(56) References cited:
- EP-A2- 0 265 911
- EP-A2- 0 556 070
- EP-A2- 1 524 136
- EP-A2- 1 524 136
- WO-A1-02/20319
- WO-A1-2006/093452
- WO-A1-2006/093452
- JP-A- 2002 181 668
- US-A- 4 422 322
- US-B1- 6 176 494
- US-B1- 6 202 020

## Description

### TECHNICAL FIELD

The invention relates to a method for determining the state of the road surface on which a vehicle has travelled. The invention furthermore relates to a method of generating a log over the use of a vehicle, wherein the state of a road is classified into a number of severity classes

### BACKGROUND ART

The state of a road surface may be determined by analysis of the spectra of vibrations occurring when the vehicle is run on the road surface. With the state of a road surface is herby intended the quality, or degree of smoothness of a road surface. A synonym term used in literature is road severity. Uneven road surfaces will result in vibrations being transmitted through the wheels and suspension to the suspended mass of the vehicle including the vehicle frame, chassis and cabin etcetera. According to related art technology, the state of road surfaces can in general be described as combinations of random noise and discrete transient obstacles. Filtering technologies can be used to separate the random noise from the transient components. The random and transient parts may then be separately evaluated. Such related art technology requires large data processing capacity. Hence, there is a need for less complicated methods for determining the state of a road surface on which a vehicle has travelled.

In EP556070, a simplified method for determining a road condition is discussed. The method disclosed includes a step of continuously measuring the relative movement between the wheel and the vehicle body by use of a linear stroke sensor while a motor vehicle is running; a step of creating spectral distribution by subjecting the output of the linear stroke sensor to the frequency analysis; a step .of calculating characteristic values inherent to various types of road conditions; and a step of specifying the type of the road condition based on the calculated characteristic values. When the type of the road condition is specified, the control device of this invention changes the damping force of the suspension to a level corresponding to the type of the road condition. The system according to EP556070 determines a road condition in the following manner. A relative movement between the wheel and vehicle body is continuously measured generating an input signal. An FFT transform of the input signal is generated providing a spectral distribution. Spectral values are combined and compared with threshold values. Depending on the result of the comparison with threshold values, the presence of a particular road condition is determined. In the patent document, the particular road condition is referred to as road surface state. The road surface state is separated into different classes, such as swell road, undulatory road, bad feeling road and bad road. It must here be noted that the input signal analysed is constituted by the measured distance between the wheel and vehicle body. The movement of the vehicle body relative to the wheel is dependent of the energy transmitted from the road over the suspension to the sprung mass. The energy transmitted to the sprung mass is dependent on the velocity of the vehicle as well as the state of the road surface. With the method and arrangement disclosed in EP 556070 it is not possible to separate the case where a vehicle is run at slow speed on a road having a relatively uneven surface, from the case where a vehicle is run at high speed on a road having a relatively smooth surface. Since the disclosed method is used for changing the damping force in dependence of the road condition, the actual state of the road surface is not of interest. What is of interest is the magnitude of vibrations which the vehicle is exposed to and which propagates through the wheel suspension. Hence, in the system described in EP556070 it is not necessary to separate whether the vehicle is run on a relatively smooth road at high speed or a relatively uneven road at slow speed, both resulting in similar magnitudes of vibrations, since an adequate setting of the dampers will be the same in both cases. A further disadvantage of systems operating according to the principle disclosed in EP556070 is that it requires a fast Fourier transform, which demands large processor capacity. Since the system is used for controlling the suspension system a very frequent updating, probably at intervals less than 1 second, of the road condition, is necessary for operation of the system. This also implies large requirements on processor capacity, in addition to the large capacity required for performing the FFT operation.

Knowledge of the state of the road surface on which a vehicle has travelled is however beneficial for other purposes than setting the damping forces of a wheel suspension in a vehicle. Knowledge of the actual state of the roads on which a vehicle has travelled may be used to optimise maintenance programs for vehicle components, for determining suitable dimensioning criteria for vehicle components for a particular client, for ride comfort estimation etcetera.

US 4422322 A discloses a method for determining the state of a road surface on which a vehicle is travelling. The distance between a mass of the vehicle and the road surface is measured by a sensor. The surface profile of the road is determines as a function of the measured value and the velocity of the vehicle. The value is filtered with a high pass filter in order to attenuate low frequency excitations and noise.

Furthermore a method for determining the state of a road surface on which a vehicle has travelled according to the steps a), b), c) and f) of claim 1 is known from WO-A-0220319.

### DISCLOSURE OF INVENTION

It is an object of the invention to provide a method for determining the state of a road surface on which a vehicle has travelled, which method may separate the two scenarios from each other, that is a method which may determine the state of the road surface such that the case where a vehicle has travelled with high speed on an even surface can be separated from the case where a vehicle has travelled with low speed on a rough surface.

This object is achieved by a method for determining the state of a road surface on which a vehicle has travelled according to claim 1.

According to the invention, the state of a road surface on which a vehicle has travelled is determined according to a method comprising the steps of:
a) retrieving a signal (S) representative of the distance (D) between the wheel axle (12) and the vehicle body (14);
b) providing, from said retrieved signal (S), a filtered first component (S1);
c) calculating a first value (V1) representative of an excitation degree of the first component (S1);
d) retrieving a signal representative of the velocity (v̂) of the vehicle;
e) compensating said first value (V1) for the influence of the velocity such that a first velocity compensated value (V1_{com,v}) is generated;
f) comparing said first velocity compensated value (V1_{com,v}) with stored data for classifying the state of the road on which the vehicle has travelled.

Since the first value is compensated for the influence of the velocity, which is substantial and essentially increases with the velocity v as v^{x}, where x is around 1,5, it is possible to establish the state of the road surface on which the vehicle has travelled, and not only how the combined effect of the state of the road surface and the velocity affects the movement of the sprung mass, as is the case with the prior art arrangement disclosed in EP 556070.

### BRIEF DESCRIPTION OF DRAWINGS

The invention will be described in further detail below, with references to appended drawings where:
Fig. 1 shows a flow scheme for a method for determining the state of a road surface on which a vehicle has travelled,
Fig 2 shows a schematic side view of a vehicle including suitable means for performing the method according to the invention,
Fig. 3 shows a diagram that may be used in connection with determining the state of the road surface, and
Fig. 4 shows a matrix suitable for logging the use of the vehicle.

### EMBODIMENT(S) OF THE INVENTION

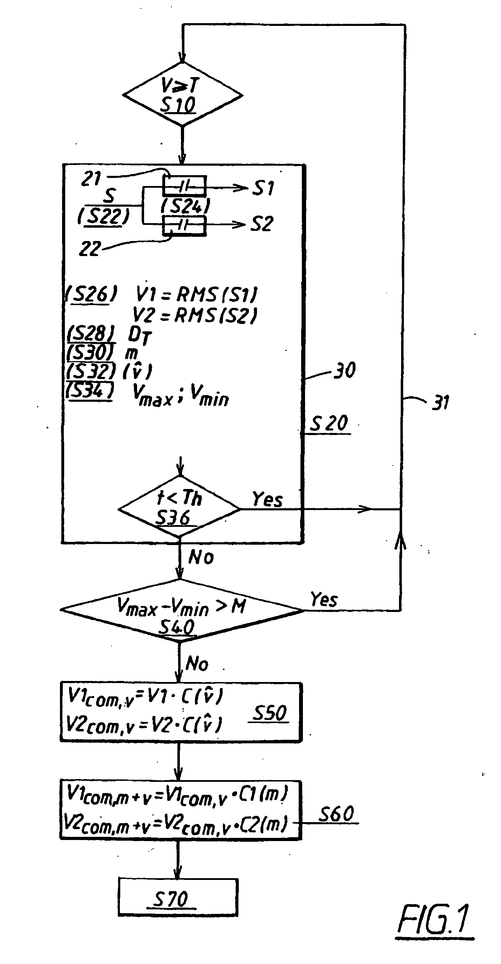

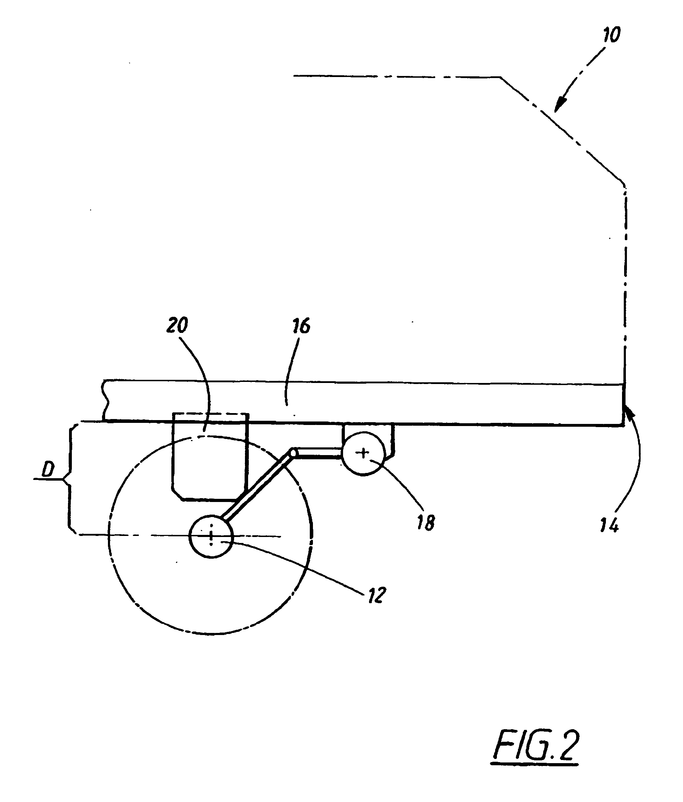

In figure 1 a flow scheme for a method for determining the state of a road surface on which a vehicle has travelled is shown. The state of a road surface is of fundamental importance for the vibration environment of the vehicle. A smooth road having few irregularities in the surface results in less vibrations than a road having large irregularities, or even holes or bumps in the road surface. The state of the road, in this application, relates to the degree of smoothness of the road surface. In figure 2 a schematic side view of a vehicle 10, which includes suitable means for performing the method according to the invention, is shown. The invention will initially be described with references to figures 1 and 2.

In a first method step, S10, it is determined that the velocity v of the vehicle 10 exceeds a threshold value T. The threshold value T may be selected to be suitable for setting a lower limit of a velocity range where it is desirable to generate a log of the use of the vehicle. When a vehicle is driven at a very low speed, that is below the selected threshold value T, the result of the determination of the state of the road may become uncertain, due to the fact that the road surface characteristic may essentially be expressed as a function of the variation in distance divided by a function of the velocity. When the velocity approaches zero, the determination of the state of the road may become unstable. For velocities under the threshold value, torsion of the frame may be used to classify the state of the road where large torsions would indicate a bad road surface and small torsions would indicate a smooth road surface. In order to measure the frame torsion, a level sensor may be installed on each side of the vehicle. The threshold value T may suitably be selected to 10 km/h.

A second method step S20 is performed under a measurement window 30. The second method step S20 includes a set of substeps S22 - S36 which are further explained below. The measurement window 30 may be set to a predefined time period. As a suitable time period 1 minute may be selected. In stead of a predefined time period also a specified travel distance or a calculated travel distance being dependent on an average velocity of the vehicle may be selected as defining the measurement window 30.

In the measurement window 30, the following operations are performed during the second method step S20:
In a first substep S22 a signal S representative of the distance D between a wheel axle 12 and a vehicle body 14 is retrieved. Suitably the distance between the wheel axle 12 and a frame component 16 is measured. The measure of any distance between a suspended component, such as the vehicle frame 16 , and an unsuspended component such as the wheel axle 12 may be selected as the input signal. Suitably a level sensor 18 for an air suspension 20 may be selected to generate the signal S representative of the distance D between a wheel axle 12 and a vehicle body 14.
In a second substep S24 a first component S1 is provided by filtering said signal S. Preferably the first component S1 is representative of an axle resonance of a wheel axle 12 of the vehicle 1. In a preferred embodiment also a second component S2 representative of sprung mass motion in the vertical direction of the vehicle 10 is provided from said retrieved signal S. Generally with sprung mass motion is intended the rigid body motion of the vehicle body arranged above the wheel suspension, typically the motion of the vehicle frame in relation to the wheel or wheel axle. The first component representative of an axle resonance of a wheel axle 12 of the vehicle 10 is typically around 9 - 12 Hz for a heavy commercial vehicle. The second component S2 representative of the sprung mass motion corresponds to a measure of the energy content at a frequency band near the resonance frequency for the sprung mass of the vehicle, which is typically around 1 - 2 Hz for a heavy commercial vehicle. The second substep S24 may preferably include the steps of exposing the signal S to a first band pass filter 21 with a first frequency band around said axle resonance of a wheel axle of the vehicle in order to obtain said first component S1, and exposing said signal to a second band pass filter 22 with a second frequency band around sprung mass motion in the vertical direction of the vehicle in order to obtain said second component S2. The first band pass filter may suitable be selected to have a first frequency band between 5 - 15 Hz, preferably between 9 - 12 Hz, for heavy commercial vehicles. The second band pass filter may suitable be selected to have a second frequency band between 0,5 - 5 Hz, preferably between 1 - 2 Hz for heavy commercial vehicles.
In a third substep S26 a first value V1 representative of an excitation degree of the first component and a second value V2 representative of an excitation degree of the second component is calculated. The first and second values V1, V2 may suitably be calculated as the root mean square values (RMS values) of the first and second components S1 and S2 during the measurement window 30. Other measures such as a RMS value formed on a two times differentiated first and second component, which values would relate to an acceleration in stead of the position; level crossing or range spectra of the first and second component; addition of endpeaks; etc may suitably be selected as values representative of the excitation degree of the first and second component. In order to obtain a sufficient accuracy of the first and second component samples of the first and second component are provided at a sampling rate exceeding 10 Hz, preferably in the region of 40 Hz. In a fourth substep S28, the distance travelled D_{T} under the measurement window is calculated. In a fifth substep S30, the suspended axle load is estimated. Suitably the estimation is performed by logging the drive axle pressure. In a sixth substep S32, the average velocity v̂ under the measurement window is formed. In a seventh substep S34 the maximum and minimum velocities during the measurement window are estimated. A suitable sampling rate for the determining the maximum and minimum velocities is around 1 Hz. The travelled distance D_{T}, the average velocity, and the drive axle pressure may suitable be determined only once during the measurement window 30. In an eight substep S36 it is determined whether the measurement window 30 has come to an end or not, by verifying whether the time t since start of the measurement window 30 is less than a threshold value Th. Alternatively, the eight substep S36, may be constituted by verifying whether the travelled distance D_{T} has exceeded a threshold value. If the measurement window 30 has not come to an end, the operations under the first through the eight substeps are recommenced by returning in a feed back loop 31.

In a third optional method step S40, it is determined whether the difference between the maximum velocity vₘₐₓ and the minimum velocity vₘᵢₙ is smaller than a threshold value M. The threshold value M may suitably be selected as the maximum of 10km/h or vₘₐₓ/5. The third method step S40 ensures that accurate estimations of the first and second component can be made. Large accelerations and decelerations give rise to vibrations which result in measurement noise.

In a fourth method step S50 the first and second values are compensated for the influence of the velocity, such that a first velocity compensated value V1_{com},ᵥ and a second velocity compensated value V2_{com,v} are generated. The first and second velocity compensated values are preferably formed by multiplying the first and second values V1, V2 with a coefficient C dependent on the velocity of the vehicle in the measurement window. The average velocity under the window may be used. The coefficient C preferable increases with the velocity v as v^{x}, where x is selected between 1 and 2, preferably between 1,3 and 1,6, more preferably around 1,5. Values of the coefficient may be calculated or retrieved from a look up table.

In an optional fifth method step S60 the first and second values may be compensated for the influence of the suspended axle load, such that a first mass and velocity compensated value V1_{com},ₘ₊ᵥ and a second mass and velocity compensated value V2_{com,m+v} are generated. The first and second mass and velocity compensated values are preferably formed by multiplying the first and second velocity compensated values V1_{com},ᵥ, V2_{com,v} with a coefficient C1 dependent on the suspended axle load in the measurement window. The drive axle pressure may be used as an input signal relating to the suspended axle load. The coefficient C1 increases with the mass, but at a much slower rate than dependency on the velocity of the coefficient C. The coefficient C1 is individual for each specific type of vehicle. Values of the coefficient may be calculated or retrieved from a look up table, which is generated through measurements on a road with a road surface having a known state, by varying the suspended axle load. The coefficient for mass compensation may be different for the first and second values respectively.

Naturally, values V1_{com,m+v} V2_{com,m+v}, that are compensated for both the mass and the velocity may preferably be calculated in order to determine the state of the road on which the vehicle has travelled. For certain vehicles, the weight of the vehicle do not vary sufficiently in order to make it desirable to include the function of compensating for the weight, particularly since the coefficient C1 increases with the mass, but at a much slower rate than the coefficients Cs dependency on the velocity.

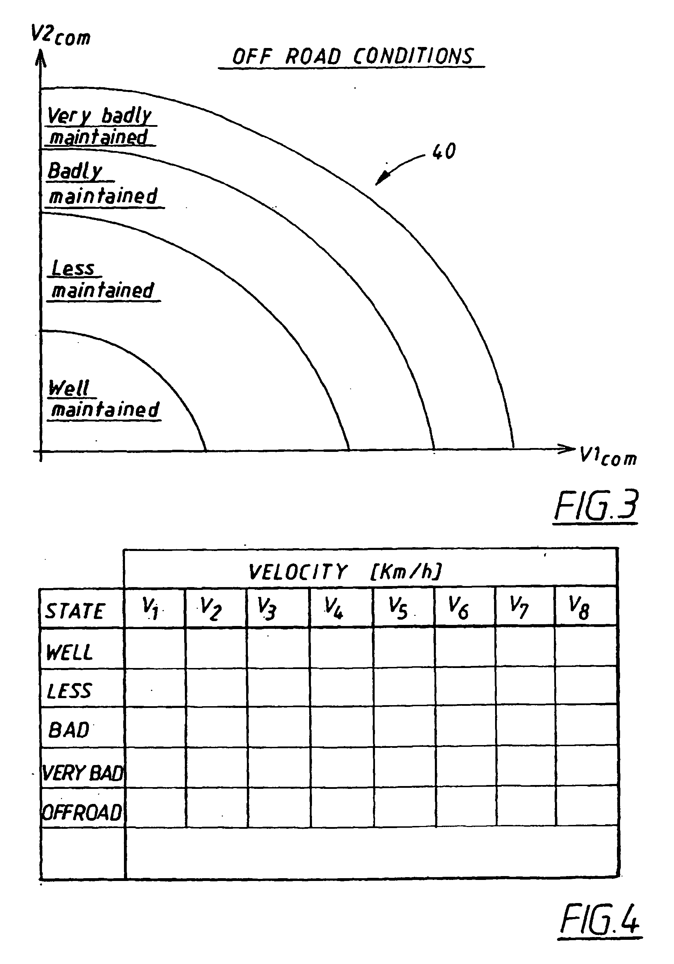

In a sixth method step S70, the first compensated value and second compensated value (V1_{com}, V2_{com}), that is either the velocity compensated values (V1_{com,v}, V2_{com,v}) or the mass and velocity compensated values (V1_{com},ₘ₊ᵥ, V2_{com},ₘ₊ᵥ) dependent on which embodiment is implemented, are compared with stored data for classifying the state of the road on which the vehicle has travelled. The compensated values (V1_{com}, V2_{com}) may thus be the velocity compensated value or the velocity and mass compensated values. The sixth method step may preferably include the step of locating the first and second compensated values (V1c_{om,} V2_{con})) in a two dimensional diagram, and that the state of the road is classified by reference values applicable to the location of the first and second compensated values in the two dimensional diagram. An example of a diagram suitable for determination of the state of the road surface is given in figure 3. In stead of locating the first and second value in a diagram, a comparison of a function F dependent of the first and second compensated values (V1_{com}, V2_{com}), that is F = (F(V1_{com}, V2_{com}), with threshold values may be used, where F is an experimentally determined function.

When the state of the road has been determined, the information may be used in a method of generating a log over the use of a vehicle, wherein the state of a road is classified into a number of severity classes (well maintained, less maintained, badly maintained, very badly maintained and off road conditions), and the velocity of the vehicle is divided into a subset of velocities such that a two dimensional matrix is obtained. The distance driven at a particular velocity and a particular state of the road, determined by a method according to any of the claims 1 - 16, is logged in a two dimensional matrix. An example of such a diagram is shown in figure 4. Of particular interest concerning wear of the vehicle is the distance driven on very badly maintained roads, and the distance driven on off road conditions. It may also be suitable to keep a separate column for the number of large bumps generating an energy input exceeding a certain level, since such bumps are critical to the wear of the vehicle. A further dimension constituting the suspended axle load may be added, whereby the suspended axle load is divided into a set of suitable ranges such that a three dimensional matrix is obtained; the distance driven at a particular velocity, with a particular suspended axle load and a particular state of the road, may be logged in the three dimensional matrix.

## Claims

1. A method for determining the state of a road surface on which a vehicle has travelled, providing a filtered first component (S1) from a retrieved signal (S), **characterized by** the steps of
a) retrieving the signal (S) representative of the distance (D) between a wheel axle (12) and the vehicle body;
b) providing, from said retrieved signal (S), said filtered first component (S1), wherein said first component (S1) is representative of an axle resonance of a wheel axle of the vehicle, and exposing said signal (S) to a first band pass filter (21) with a first frequency band around said axle resonance of the wheel axle in order to obtain said first component (S1);
c) calculating a first value (V1) representative of an excitation degree of the first component (S1);
d) retrieving a signal representative of the velocity (ν́) of the vehicle;
e) compensating said first value for the influence of the velocity such that a first velocity compensated value (V1_{com,v}) is generated;
f) comparing said first velocity compensated value (V1_{com,v}) with stored data for classifying the state of the road on which the vehicle has travelled:

2. A method according to claim 1, **characterized in that** said first frequency band is between 5 and 15 Hz, preferably between 9-12 Hz and/or
that said step c) includes the step of forming a root mean square value of said first component (S1) in a measurement window (30) in order to generate the first value (V1).

3. A method according to any of claims 1 - 2, **characterized in that** said step e) includes the step of multiplying the first value (V1) with a coefficient (C) dependent on the velocity of the vehicle wherein said coefficient (C) preferably increases with the velocity v as v^{1,5}.

4. A method according to any of claims 1 - 3, **characterized in that** said step e) furthermore includes the step of compensating for the suspended axle load, by multiplying the first velocity compensated value (V1_{com},ᵥ) with a first factor (C1(m)) dependent on the suspended axle load (m) in order to obtain a first velocity and mass compensated value (V1_{com,m+v}).

5. A method according to claim 4, **characterized in that** said step f) is replaced with the step of comparing said first velocity and mass compensated value (V1_{com},ₘ₊ᵥ) with stored data (D) for classifying the state of the road on which the vehicle has travelled.

6. A method according to any of claims 1 - 5, **characterized in that** said method step b) includes the step b2) of providing a filtered second component (S2) from said retrieved signal (S) and that the following further method steps are performed:
c2) calculating a second value (V2) representative of an excitation degree of the second component (S2);
e2) compensating said second value (V2) for the influence of the velocity such that a second velocity compensated value (V2_{com},ᵥ) is generated;
f2) comparing said second velocity compensated value (V2_{com},ᵥ) with stored data for classifying the state of the road on which the vehicle has travelled wherein said second component (S2) is preferably representative of a motion in the vertical direction of the vehicle of a sprung mass of the vehicle.

7. A method according to claim 6 , **characterized in that** said step b2 includes the step of exposing said signal (S) to a second band pass filter (22) with a second frequency band near the resonance frequency for the sprung mass of the vehicle in order to obtain said second component (S2).

8. A method according to claim 7, **characterized in that** said second frequency band is between 0,5 - 5 Hz, preferably between 1 - 2 Hz.

9. A method according to any of claims 6 - 8, **characterized in that** said step c) further includes the step of forming a root mean square value of said second component (S2) in a measurement window (30) in order to generate the second value (V2).

10. A method according to any of claims 6 - 9, **characterized in that** said step e) further includes the step of multiplying the second value (V2) with a coefficient (C) dependent on the velocity of the vehicle wherein said coefficient (C) preferably increases with the velocity v as V^{1,15}.

11. A method according to any of claims 6 - 10, **characterized in that** said step e) furthermore includes the step of compensating for the suspended axle load by multiplying the second velocity compensated value (V2_{com,v}) with a second factor (C2(m)) dependent on the suspended axle load in order to obtain a second velocity and mass compensated value (V2_{com,m+v})

12. A method according to claim 11, **characterized in that** said step f) is replaced with the step of comparing said first velocity and mass compensated value (V1_{com},ₘ₊ᵥ) and said step f2) is replaced with the step of comparing said second velocity and mass compensated value (V2_{com},ₘ₊ᵥ) with stored data (D) for classifying the state of the road on which the vehicle has travelled.

13. A method according to any of claims 6 - 12 **characterized in that** said step f) includes the step of locating the first and second compensated values (V1_{com}, V2_{com}) in a two dimensional diagram (40), and that the state of the road is classified by reference values applicable to the location of the first and second compensated values in the two dimensional diagram.

14. A method according to any of claims 1-13, **characterized by** selecting the distance (D) between the vehicle frame (16) and the wheel axle (12) as said signal (S).

15. A method according to any of claims 1-14, **characterized by** generating said signal (S) representative of the distance (D) by means of a level sensor (18) for an air suspension (20).

16. A method of determining a wear of a vehicle by generating a log over the use of a vehicle, wherein the state of a road is classified into a number of severity classes, and the velocity of the vehicle is divided into a subset of velocities such that a two dimensional matrix is obtained; wherein the distance driven at a particular velocity and a particular state of the road, determined by a method according to any of the claims 1 - 15, is logged in said two dimensionalmatrix.

17. A method according to claim 16, wherein a further dimension constituting the suspended axle load is added, whereby the suspended axle load is divided into a set of suitable ranges such that a three dimensional matrix is obtained; wherein the distance driven at a particular velocity, with a particular suspended axle load and a particular state of the road, determined by a method according to any of the claims 1 - 16, is logged in said three dimensional matrix.

## Patentansprüche

1. Verfahren zur Bestimmung des Zustands einer Straßenoberfläche, auf der ein Fahrzeug gefahren ist, wobei eine gefilterte erste Komponente (S1) aus einem abgefragten Signal (S) bereitgestellt wird, **gekennzeichnet durch** die Schritte
a) Abfragen des Signals (S), das für den Abstand zwischen einer Radachse (12) und der Fahrzeugkarosserie repräsentativ ist,
b) Bereitstellung der ersten gefilterten Komponente (S1) aus dem abgefragten Signal (S), wobei die erste Komponente (S1) für eine Achsenresonanz einer Radachse des Fahrzeugs repräsentativ ist, und Unterwerfen des Signals (S) einem ersten Bandpassfilter (21) mit einem ersten Frequenzband um die Achsenresonanz der Radachse, um die erste Komponente (S1) zu erhalten,
c) Berechnen eines ersten Werts (V1), der für einen Erregungsgrad der ersten Komponente (S1) repräsentativ ist,
d) Abfragen eines Signals, das für die Geschwindigkeit (v) des Fahrzeugs repräsentativ ist,
e) Kompensierung des ersten Werts für den Einfluss der Geschwindigkeit, so dass ein erster geschwindigkeitskompensierter Wert (V1 com, v) generiert wird,
f) Vergleichen des ersten geschwindigkeitskompensierten Werts (V1 com, v) mit gespeicherten Daten zur Klassifizierung des Zustands der Straße, auf der das Fahrzeug gefahren ist.

2. Verfahren nach Anspruch 1, **dadurch gekennzeichnet, dass** das erste Frequenzband zwischen 5 und 15 Hz liegt, vorzugsweise zwischen 9-12 Hz, und/oder
dass der Schritt c) den Schritt umfasst, dass ein quadratischer Mittelwert der ersten Komponente (S1) in einem Messfenster (30) gebildet wird, um den ersten Wert (V1) zu generieren.

3. Verfahren nach einem der Ansprüche 1 bis 2, **dadurch gekennzeichnet, dass** der Schritt e) den Schritt der Multiplizierung des ersten Werts (V1) mit einem von der Geschwindigkeit des Fahrzeugs abhängigen Koeffizienten (C) umfasst, wobei der Koeffizient (C) vorzugsweise mit der Geschwindigkeit v wie v^{1,5} ansteigt.

4. Verfahren nach einem der Ansprüche 1 bis 3, **dadurch gekennzeichnet, dass** der Schritt e) außerdem den Schritt der Kompensierung der aufgehängten Achslast durch Multiplizierung des ersten geschwindigkeitskompensierten Werts (V1_{com},ᵥ) mit einem von der aufgehängten Achslast (m) abhängigen ersten Faktor (C1 (m)) umfasst, um einen ersten geschwindigkeits- und massenkompensierten Wert (V1_{com,m+v)} zu erhalten.

5. Verfahren nach Anspruch 4, **dadurch gekennzeichnet, dass** der Schritt f) durch den Schritt ersetzt wird, dass der erste geschwindigkeits- und massenkompensierte Wert (V1_{com},ₘ₊ᵥ) mit gespeicherten Daten (D) zur Klassifizierung des Zustands der Straße verglichen wird, auf der das Fahrzeug gefahren ist.

6. Verfahren nach einem der Ansprüche 1 bis 5, **dadurch gekennzeichnet, dass** der Verfahrensschritt b) den Schritt b2) umfasst, in dem eine gefilterte zweite Komponente (S2) aus dem abgefragten Signal (S) bereitgestellt wird und dass die folgenden weiteren Verfahrensschritte durchgeführt werden:
c2) Berechnen eines zweiten Werts (V2), der für einen Erregungsgrad der zweiten Komponente (S2) repräsentativ ist,
e2) Kompensierung des zweiten Werts (V2) für den Einfluss der Geschwindigkeit, so dass ein zweiter geschwindigkeitskompensierter Wert (V2_{con1},ᵥ) generiert wird,
f2) Vergleich des zweiten geschwindigkeitskompensierten Werts (V2_{com},ᵥ) mit gespeicherten Daten zur Klassifizierung des Zustands der Straße, auf der das Fahrzeug gefahren ist, wobei die zweite Komponente (S2) vorzugsweise für eine Bewegung einer gefederten Masse des Fahrzeugs in der Vertikalrichtung des Fahrzeugs repräsentativ ist.

7. Verfahren nach Anspruch 6, **dadurch gekennzeichnet, dass** der Schritt b2 den Schritt umfasst, dass das Signal (S) einem zweiten Bandpassfilter (22) unterworfen wird, der ein zweites Frequenzband in der Nähe der Resonanzfrequenz der gefederten Masse des Fahrzeugs aufweist, um die zweite Komponente (S2) zu erhalten.

8. Verfahren nach Anspruch 7, **dadurch gekennzeichnet, dass** das zweite Frequenzband zwischen 0,5 bis 5 Hz liegt, vorzugsweise zwischen 1 bis 2 Hz.

9. Verfahren nach einem der Ansprüche 6 bis 8, **dadurch gekennzeichnet, dass** der Schritt c) außerdem den Schritt der Bildung eines quadratischen Mittelwerts der zweiten Komponente (S2) in einem Messfenster (30) umfasst, um den zweiten Wert (V2) zu generieren.

10. Verfahren nach einem der Ansprüche 6 bis 9, **dadurch gekennzeichnet, dass** der Schritt e) außerdem den Schritt der Multiplizierung des zweiten Werts (V2) mit einem von der Geschwindigkeit des Fahrzeugs abhängigen Koeffizienten (C) umfasst, wobei der Koeffizient (C) vorzugsweise mit der Geschwindigkeit v wie v^{1,5} ansteigt.

11. Verfahren nach einem der Ansprüche 6 bis 10, **dadurch gekennzeichnet, dass** der Schritt e) außerdem den Schritt der Kompensierung der aufgehängten Achslast durch Multiplizierung des zweiten geschwindigkeitskompensierten Werts (V2_{com},ᵥ) mit einem von der aufgehängten Achslast abhängigen zweiten Faktor (C2(m)) umfasst, um einen zweiten geschwindigkeits- und massenkompensierten Wert (V2_{com},ₘ₊ᵥ) zu erhalten.

12. Verfahren nach Anspruch 11, **dadurch gekennzeichnet, dass** der Schritt f) durch den Schritt ersetzt wird, dass der erste geschwindigkeits- und massenkompensierte Wert (V1_{com},ₘ₊ᵥ) verglichen wird, und der Schritt f2) durch den Schritt ersetzt wird, dass der zweite geschwindigkeits- und massenkompensierte Wert (V2_{com},ₘ₊ᵥ) mit gespeicherten Daten (D) zur Klassifizierung des Zustands der Straße verglichen wird, auf der das Fahrzeug gefahren ist.

13. Verfahren nach einem der Ansprüche 6 bis 12, **dadurch gekennzeichnet, dass** der Schritt f) den Schritt der Anordnung des ersten und zweiten kompensierten Werts (V1_{com,} V2_{com}) in einem zweidimensionalen Diagramm (40) umfasst, und dass der Zustand der Straße durch Referenzwerte klassifiziert wird, die für die Anordnung des ersten und zweiten kompensierten Werts in dem zweidimensionalen Diagramm anwendbar sind.

14. Verfahren nach einem der Ansprüche 1 bis 13, **dadurch gekennzeichnet, dass** der Abstand (D) zwischen dem Fahrzeugrahmen (16) und der Radachse (12) als das Signal (S) gewählt wird.

15. Verfahren nach einem der Ansprüche 1 bis 14, **dadurch gekennzeichnet, dass** das für den Abstand (D) repräsentative Signal (S) mittels eines Höhensensors (18) für eine Luftfederung (20) generiert wird.

16. Verfahren zur Bestimmung der Abnutzung eines Fahrzeugs durch Generierung eines Protokolls über die Verwendung eines Fahrzeugs, wobei der Straßenzustand in eine Anzahl von unterschiedlichen Klassen klassifiziert wird, und die Geschwindigkeit des Fahrzeugs in einen Untersatz von Geschwindigkeiten unterteilt wird, so dass eine zweidimensionale Matrix erhalten wird, wobei die Distanz, die bei einer bestimmten Fahrzeuggeschwindigkeit und bei einem bestimmten Straßenzustand gefahren wird, der durch ein Verfahren nach einem der Ansprüche 1 bis 15 bestimmt wird, in der zweidimensionalen Matrix protokolliert wird.

17. Verfahren nach Anspruch 16, wobei eine weitere Dimension hinzugefügt wird, die die aufgehängte Achslast darstellt, wobei die aufgehängte Achslast in einen Satz von geeigneten Bereichen unterteilt wird, so dass eine dreidimensionale Matrix erhalten wird, wobei die Distanz, die bei einer bestimmten Fahrzeuggeschwindigkeit, mit einer bestimmten aufgehängten Achslast und bei einem bestimmten Straßenzustand gefahren wird, der durch ein Verfahren nach einem der Ansprüche 1 bis 16 bestimmt wird, in der dreidimensionalen Matrix protokolliert wird.

## Revendications

1. Procédé de détermination de l'état d'une surface de route sur laquelle un véhicule s'est déplacé, fournissant une première composante filtrée (S1) à partir d'un signal récupéré (S), **caractérisé par** les étapes consistant à
a) récupérer le signal (S) représentatif de la distance (D) entre un essieu de roue (12) et la carrosserie du véhicule ;
b) fournir à partir du signal récupéré (S) la première composante filtrée (S1), la première composante (S1) étant représentative d'une résonance d'essieu d'un essieu de roue du véhicule, et exposer le signal (S) à un premier filtre passe bande (21) ayant une première bande de fréquences autour de la résonance d'essieu de l'essieu de roue afin d'obtenir la première composante (S1) ;
c) calculer une première valeur (V1) représentative d'un degré d'excitation de la première composante (1) ;
d) récupérer un signal représentatif de la vitesse (v) du véhicule ;
e) compenser la première valeur de l'influence de la vitesse de sorte qu'une première valeur compensée en vitesse (V1com,v) est produite ;
f) comparer la première valeur compensée en vitesse (V1com,v) avec des données mémorisées pour classer l'état de la route sur laquelle le véhicule s'est déplacé.

2. Procédé selon la revendication 1, **caractérisé en ce que** la première bande de fréquences est entre 5 et 15 Hz, de préférence entre 9 et 12 Hz et/ou en ce que l'étape c) comprend l'étape consistant à former une valeur quadratique moyenne de la première composante (S1) dans une fenêtre de mesure (30) afin de produire la première valeur (V1).

3. Procédé selon l'une quelconque des revendications 1 ou 2, **caractérisé en ce que** l'étape e) comprend l'étape consistant à multiplier la première valeur (V1) par un coefficient (C) fonction de la vitesse du véhicule, le coefficient (C) augmentant de préférence avec la vitesse v comme v^{1,5}.

4. Procédé selon l'une quelconque des revendications 1 à 3, **caractérisé en ce que** l'étape (e) comprend de plus l'étape consistant à compenser la charge d'essieu suspendue, en multipliant la première valeur compensée en vitesse (V1_{com,v}) avec un première facteur (C1(m)) fonction de la charge d'essieu suspendue (m) afin d'obtenir une première valeur compensée en vitesse et masse (V1_{com,m+v}).

5. Procédé selon la revendication 4, **caractérisé en ce que** l'étape f) est remplacée par l'étape consistant à comparer la première valeur compensée en vitesse et masse (V_{1com,m+v}) avec des données mémorisées (D) pour classer l'état de la route sur laquelle le véhicule s'est déplacé.

6. Procédé selon l'une quelconque des revendications 1 à 5, **caractérisé en ce que** l'étape b) du procédé comprend l'étape b2) consistant à fournir une seconde composante filtrée (S2) à partir du signal récupéré (S) et **en ce que** les étapes de procédé supplémentaires suivantes sont effectuées :
c2) calculer une seconde valeur (V2) représentative d'un degré d'excitation de la seconde composante (S2);
e2) compenser la seconde valeur (V2) de l'influence de la vitesse de sorte qu'une seconde valeur compensée en vitesse (V2_{com},ᵥ) est produite ;
f2) comparer la seconde valeur de vitesse compensée (V2_{com},ᵥ) avec des données mémorisées pour classer l'état de la route sur laquelle le véhicule s'est déplacé, la seconde composante (S2) étant de préférence représentative d'un déplacement dans la direction verticale du véhicule d'une masse suspendue sur ressorts du véhicule.

7. Procédé selon la revendication 6, **caractérisé en ce que** l'étape b2 comprend l'étape consistant à exposer le signal (S) à un second filtre passe bande (22) ayant une seconde bande de fréquences proche de la fréquence de résonance de la masse suspendue sur ressorts du véhicule afin d'obtenir la seconde composante (S2).

8. Procédé selon la revendication 7, **caractérisé en ce que** la seconde bande de fréquences est entre 0,5 et 5Hz, de préférence entre 1 et 2 Hz.

9. Procédé selon l'une quelconque des revendications 6 à 8, **caractérisé en ce que** l'étape c) comprend de plus l'étape consistant à former une valeur quadratique moyenne de la seconde composante (S2) dans une fenêtre de mesure (30) afin de produire la seconde valeur (V2).

10. Procédé selon l'une quelconque des revendications 6 à 9, **caractérisé en ce que** l'étape e) comprend de plus l'étape consistant à multiplier la seconde valeur (V2) par un coefficient (C) fonction de la vitesse du véhicule, le coefficient (C) augmentant de préférence avec la vitesse comme v^{1,5}.

11. Procédé selon l'une quelconque des revendications 6 à 10, **caractérisé en ce que** l'étape e) comprend de plus l'étape consistant à compenser la charge d'essieu suspendue en multipliant la seconde valeur de vitesse compensée (V2_{com,v}) par un second facteur (C2(m)) fonction de la charge d'essieu suspendue afin d'obtenir une seconde valeur compensée en vitesse et en masse (V2_{com,m+v}).

12. Procédé selon la revendication 11, **caractérisé en ce que** l'étape f) est remplacée par l'étape consistant à comparer la première valeur compensée en vitesse et masse (V_{1com,m+v}) et l'étape f2) est remplacée par l'étape consistant à comparer la seconde valeur compensée en vitesse et masse (V2_{com,m+v}) avec des données mémorisées (D) pour classer l'état de la route sur laquelle le véhicule s'est déplacé.

13. Procédé selon l'une quelconque des revendications 6 à 12, **caractérisé en ce que** l'étape f) comprend l'étape consistant à positionner les première et seconde valeurs compensées (V1_{com,} V2_{com}) dans un graphique en deux dimensions (40), et **en ce que** l'état de la route est classé par des valeurs de référence applicables à l'emplacement des première et seconde valeurs compensées dans le graphique en deux dimensions.

14. Procédé selon l'une quelconque des revendications 1 à 13, **caractérisé par** la sélection de la distance (D) entre le châssis de véhicule (16) et l'essieu de roue (12) en tant que signal (S).

15. Procédé selon l'une quelconque des revendications 1 à 14, **caractérisé par** la production du signal (S) représentatif de la distance (D) par l'intermédiaire d'un détecteur de niveau (18) pour une suspension pneumatique (20).

16. Procédé de détermination de l'usure d'un véhicule en produisant un journal de l'utilisation d'un véhicule, dans lequel l'état d'une route est classé en plusieurs classes de sévérité, et la vitesse du véhicule est divisée en un sous-ensemble de vitesses de sorte qu'une matrice à deux dimensions est obtenue ; la distance conduite à une vitesse particulière et un état particulier de la route, déterminée par un procédé selon l'une quelconque des revendications 1 à 15, étant reportée dans la matrice à deux dimensions.

17. Procédé selon la revendication 16, dans lequel une dimension supplémentaire constituant la charge d'essieu suspendue est ajoutée, de sorte que la charge d'essieu suspendue est divisée en un ensemble de plages adaptées de sorte qu'une matrice tridimensionnelle est obtenue ; la distance conduite à une vitesse particulière, avec une charge d'essieu suspendue particulière et un état particulier de la route, déterminée par un procédé selon l'une quelconque des revendications 1 à 16, est reportée dans la matrice tridimensionnelle.
